(19) Europäisches Patentamt
European Patent Office
Office européen des brevets

(11) **EP 2 125 843 B1**

(12) **EUROPEAN PATENT SPECIFICATION**

(45) Date of publication and mention
of the grant of the patent:
**14.11.2012 Bulletin 2012/46**

(51) Int Cl.:
***C02F 5/12*** *(2006.01)*      ***C02F 5/14*** *(2006.01)*
***C07F 9/38*** *(2006.01)*

(21) Application number: **07857377.1**

(22) Date of filing: **11.12.2007**

(86) International application number:
**PCT/EP2007/063685**

(87) International publication number:
**WO 2008/071691 (19.06.2008 Gazette 2008/25)**

(54) **REACTIVE PHOSPHONATES**

REAKTIVE PHOSPHONATE

PHOSPHONATES RÉACTIFS

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **11.12.2006 EP 06025515**

(43) Date of publication of application:
**02.12.2009 Bulletin 2009/49**

(60) Divisional application:
**12161861.5 / 2 484 684**

(73) Proprietor: **Dequest AG**
**6300 Zug (CH)**

(72) Inventors:
- **NOTTÉ, Patrick P.**
 **1300 Wavre (BE)**
- **VAN BREE, Jan H. J.**
 **3040 Ottenburg (BE)**
- **DEVAUX, Albert**
 **1345 Mont-Saint-Guibert (BE)**

(74) Representative: **Rippel, Hans Christoph**
**Isenbruck Bösl Hörschler LLP**
**Eastsite One**
**Seckenheimer Landstrasse 4**
**68163 Mannheim (DE)**

(56) References cited:
 **EP-A- 0 617 008     EP-A- 0 711 733**

EP-A- 1 887 011     EP-A2- 0 401 833
WO-A-02/078448     DE-A1- 2 335 331
DE-A1- 2 423 881     US-A- 4 187 245
US-A- 4 707 306     US-A- 5 414 112
US-A- 5 945 240

- **MORTIER, JACQUES ET AL: "Synthesis of N-Alkyl/Aryl-.alpha./.beta.-Aminoalkylphos phonic Acids from Organodichloroboranes and .alpha./.beta.-Azidoalkylphosphonates via Polyborophosphonates" ORGANIC LETTERS , 1 (7), 981-984 CODEN: ORLEF7; ISSN: 1523-7060, 1999, XP002431622**
- **DATABASE CA [Online] CHEMICAL ABSTRACTS SERVICE, COLUMBUS, OHIO, US; XU, XINGJUE ET AL: "Structure-based design of novel inhibitors of 3-deoxy-D-manno- octulosonate 8-phosphate synthase" XP002431624 retrieved from STN Database accession no. 2004:93833 & DRUG DESIGN AND DISCOVERY , 18(2-3), 91-99 CODEN: DDDIEV; ISSN: 1055-9612, 2003,**
- **STEVENS, CHRISTIAN ET AL: "A convenient synthesis of dialkyl [2-(bromomethyl)aziridin-1-yl]methylphosphonates, new heterocyclic .beta.-aza phosphonates" SYNLETT , (2), 180-182 CODEN: SYNLES; ISSN: 0936-5214, 1998, XP001093728**
- **BEL' SKII, F. I ET AL.: BULL. ACAD. SCI. USSR DIV. CHEM. SCI. (ENGL. TRANSSL.), vol. 31, no. 1, 1982, pages 93-100, XP002486923 & DATABASE BEILSTEIN [Online] BEILSTEIN INSTITUTE FOR ORGANIC CHEMISTRY, FRANKFURT-MAIN, DE; retrieved from XFIRE Database accession no. BRN 1812882**

**Description**

This invention relates to a class of novel phosphonate compounds. In particular, novel reactive phosphonate compounds having the formula Y-X-N(W) (ZPO$_3$M$_2$) wherein the individual structural moieties have a specifically defined meaning as set forth hereinafter. The "reactive" moiety, Y, is represented by Cl, I, Br, HSO$_4$, NO$_3$, CH$_3$SO$_3$ and p-toluene sulfonic acid, and mixtures thereof, whereas the hydrocarbon link, X, between the nitrogen and the reactive moiety is [A-O]$_x$-A wherein A is a C$_2$-C$_6$ hydrocarbon chain and x is an integer of from 1-100. The novel phosphonates herein are particularly beneficial for "tailor" synthesizing novel phosphonate compounds for example for use in a multitude of applications such as dispersion, water-treatment, scale inhibition, sequestration, corrosion inhibition, pharmaceuticals and pharmaceutical intermediates, textiles, detergents, secondary oil recovery, paper industry, sugar and beer industry, fertilizers and micronutrients and metal treatment.

Phosphonate compounds broadly are well-known and have been used in multiple applications. The prior art is thus crowded and diverse. EP 0 401 833 discloses aminophosphonate-containing polymers and their use as dispersants for concentrated aqueous particulate slurries and as corrosion and scale inhibitors. The phosphonates contain ethylenically unsaturated comonomers and can be prepared by reacting the polymeric reactant with a phosphonate halohydrin or with a phosphonate epoxide.

US 5,879,445 describes the use of compounds containing at least one phosphonic aminoalkylene group and at least one polyalkoxylated chain for fluidizing an aqueous suspension of mineral particles or hydraulic binder paste. WO 94/08913 divulges comparable technologies.

US 4,330,487 describes a process of preparing N,N'-disubstituted methylene phosphonic acids by reacting α, ω-alkylene diamines with formaldehyde and phosphorous acid in aqueous medium in accordance with the Mannich reaction at a pH of generally less than 1. Zaitsev V.N. et al., Russian Chemical Bulletin, (1999), 48(12), 2315-2320, divulges modified silicas containing aminophosphonic acids covalently bonded onto the silica surface.

US 4,260,738 describes starch ether derivatives containing aminophosphonic acid groups, namely either one or two anionic methylene phosphonic acid groups, bound to a cationic nitrogen. The starch derivative is said to exhibit cationic or anionic properties which (properties) may be increased by introducing selected groups together with the aminophosphonic acid reagent. The starch derivatives can be used beneficially as pigment retention aids in paper making processes. US 4,297,299 pertains to novel N-(alkyl)-N-(2-haloethyl)-aminomethylene phosphonic acids exhibiting desirable pigment retention properties upon use in paper making processes.

US 4,707,306 discloses alpha-aminomethylene phosphonate betaines and polymers prepared therewith. J. Mortier et al. disclose the synthesis of N-alkyl/aryl-alpha/beta-aminoalkylphosphonic acids from organodichloroboranes and alpha/beta-azidoalkylphosphonates via polyborophosphonates.

EP-A 0 711 733 discloses a method of treating an aqueous system of a paper and/or pulp mill to control the formation, deposition and adherency of scale impating compounds including calcium sulfite in an aqueous system by adding to the system a deposit control agent comprising certain polyether polyamino phosphonates.

US 5,945,240 discloses a direct drawing lithographic printing plate precursor comprising - inter alia - polyether polyamino phosphonates.

The prior art does provide a limited number of phosphonate compounds which are frequently marginally adapted and optimized for use within the context of an ever broadening range of known and novel applications.

It is a major object of this invention to provide novel phosphonate compounds eminently suitable and optimized for a large variety of applications. Another object of this invention aims at generating a range of novel reactive phosphonates suitable for "tailor" synthesizing phosphonate compounds, with high selectivity, which compounds can be used beneficially in established and additional, to current usages, applications.

The foregoing and other objects can now be met by a specifically defined class of reactive phosphonate compounds as defined in detail below.

The term "percent" or "%" as used throughout this application stands, unless defined differently, for "percent by weight" or "% by weight". The terms "phosphonic acid" and "phosphonate" are also used interchangeably depending, of course, upon medium prevailing alkalinity/acidity conditions. The term "reactive" phosphonate is merely meant to emphasize the ease with which the claimed phosphonate compounds can be used for synthesizing other phosphonates.

Phosphonic acid compounds have now been discovered containing, in essence, a reactive moiety Y attached, by means of a hydrocarbon link, X, to an amino phosphonic acid moiety. In more detail, this invention concerns:

a reactive phosphonate compound having the formula:

Y-X-N (W) (ZPO$_3$M$_2$)

wherein Y is a substituent the conjugated acid of which has a pKa equal to or smaller than 4.0 selected from the group of Cl, I, Br, HSO$_4$, NO$_3$, CH$_3$SO$_3$ and p-toluene sulfonate and mixtures thereof;

X is [A-O]x-A wherein A is a $C_2$-$C_9$ linear or branched hydrocarbon chain, $C_3$-$C_{10}$-cycloalkane-diyl or $C_6$-$C_{12}$-arene-diyl, and x is an integer from 1 to 200;

provided that when X is substituted by OH such moiety can be attached to any carbon atom other than the second carbon atom starting from Y;

Z is a $C_1$-$C_6$ alkylene chain;

M is selected from H and $C_1$-$C_{20}$ linear or branched hydrocarbon chains, a cyclohexane or a phenyl moiety;

W is selected from H, $ZPO_3M_2$ and $[V-N(K)]_nK$, wherein V is selected from: a $C_2$-$C_{50}$ linear or branched hydrocarbon chain, $C_3$-$C_{10}$-cycloalkane-diyl or $C_6$-$C_{12}$-arene-diyl, optionally substituted by $C_1$-$C_{12}$ linear, branched, cyclic or aromatic groups, (which chains and/or groups are) optionally substituted by OH, COOH, F, OR' or SR' moieties wherein R' is a $C_1$-$C_{12}$ linear or branched hydrocarbon chain, a cyclohexane or a phenyl moiety; and from [A-O)x-A wherein A is a $C_2$-$C_9$ linear or branched hydrocarbon chain, $C_3$-$C_{10}$-cycloalkane-diyl or $C_6$-$C_{12}$-arene-diyl, and x is an integer from 1 to 200; and

K is ZPO3M2 or H and n is an integer from 0 to 200.

In preferred executions, the pKa is equal to or smaller than 1.0 and X is [A-O]x-A wherein A is a $C_2$-$C_6$ hydrocarbon chain and x is of from 1-100 and W is $ZPO_3M_2$.

The pKa value is a well known variable which can be expressed as follows:

$$pKa = -\log_{10}Ka.$$

wherein Ka represents the thermodynamic equilibrium acidity constant. The pKa values of all acid substances are known from the literature or can, if this were needed, be determined conveniently. Values are listed, e. g., in the Handbook of Chemistry and Physics.

In the definition of R', A and V the $C_x$-$C_y$ linear or branched hydrocarbon chain is preferably a linear or branched alkane-diyl with a respective chain length. Cyclic hydrocarbon is $C_3$-$C_{10}$-cycloalkane-diyl. Aromatic hydrocarbon is $C_6$-$C_{12}$-arene-diyl. When the foregoing hydrocarbon chains are substituted, it is preferably with linear or branched alkyl of a respective chain length, $C_3$-$C_{10}$-cycloalkyl, or $C_6$-$C_{12}$-aryl. All these groups can be further substituted with the groups listed with the respective symbols.

More and particularly preferred chain lengths for alkane moieties are listed with the specific symbols. A cyclic moiety is more preferred a cyclohexane moiety, in case of cyclohexane-diyl in particular a cyclohexane-1,4-diyl moiety. An aromatic moiety is preferably phenylene or phenyl as the case may be, for phenylene 1,4-phenylene is particularly preferred.

The individual radicals in the phosphonate compound can, in a preferred manner, be beneficially selected from species as follows:

| Moiety | Preferred | Most Preferred |
|---|---|---|
| V | $C_2$-$C_{30}$ | $C_2$-$C_{12}$ |
|  | [A-O]x-A | [A-O]x-A |
| wherein for both, X and V independently; | | |
| A | $C_2$-$C_6$, | $C_2$-$C_4$; and |
| x | 1-100 | 1-100 |
| Z | $C_1$-$C_3$ | $C_1$ |
| M | H, $C_1$-$C_6$ | H, $C_1$-$C_4$ |
| n | 1-100 | 1-25 |

A phosphonate compound having an OH substituent attached to the second, starting from Y, carbon atom of X, in the event Y stands for halogen, is not a phosphonate in the meaning of the invention. Preferably, a reactive phosphonate, in the event Y stands for halogen, shall not carry an OH substituent attached to any one of the second, third or fourth, starting from Y, carbon atom of X.

In a preferred embodiment of the invention X is [A-O]x-A and (W) is $ZPO_3M_2$.

The preparation of the novel phosphonate compounds herein usually can require a sequence of individually well known measures routinely available in the domain of chemical synthesis. In one approach, the phosphonate compound can be prepared by phosphonating a chloroalkyl amine hydrochloride in a conventional manner by reaction, in aqueous medium, with phosphorous acid and formaldehyde, in acid medium, at a temperature generally in the range of from 50 °C to 140 °C, preferably of from 90 °C to 120 °C. The reaction partners are used in molar proportions consonant with the moiety ratios of the phosphonate product to be synthesized. In another approach, a reactive phosphonate can be synthesized by reacting, in aqueous medium having a pH of 6 or smaller, the corresponding alcohol e.g. HO-X-N $(ZPO_3M_2)_2$ with a suitable precursor for Y, e.g. hydrobromic, hydrochloric and/or hydroiodic acid, in obviously acid medium at a temperature in the range of from 100 °C to 200 °C, preferably 110 °C to 150 °C. A reactive phosphonate compound can also be prepared, as illustrated below, by a sequence of reactions involving, for example, the conversion of acrylonitrile:

$$CH_2=CH-CN \text{ (H)} + HCl/H_2O \rightarrow Cl-CH_2-CH_2-C\equiv N \text{ (I)}$$

$$\text{(I)} + H_2/\text{catalyst} \rightarrow Cl-CH_2-CH_2-CH_2-NH_2 \text{ (C)}$$

$$\text{(C)} + CH_2O/H_3PO_3/HCl \rightarrow Cl-(CH_2)_3-N(CH_2PO_3H_2)_2 \text{ (D)}.$$

Alternatively, the phosphonate compounds herein can be synthesized differently as follows:

$$\text{(H)} + H^+/H_2O \rightarrow HO-CH_2-CH_2-CN \text{ (E)}$$

$$\text{(E)} + H_2/\text{catalyst} \rightarrow HO-(CH_2)_3-NH_2 \text{ (F)}$$

$$\text{(F)} + HCl/H_2O \rightarrow \text{(C)} \rightarrow \text{(D) or}$$

$$\text{(F)} + CH_2O/H_3PO_3/HCl \rightarrow HO-(CH_2)_3N(CH_2PO_3H_2) \text{ (G)}$$

$$\text{(G)} + HCl/H_2O \rightarrow \text{(D)}.$$

The acrylonitrile starting material can be substituted by other starting materials capable of yielding a reactive phosphonate. As an example such a phosphonate can be routinely synthesized starting from dichloro ethane and and alkali cyanide.

In yet another approach, this invention contemplates a process for the manufacture of the phosphonate compound of Claim 1, wherein Y is I or Br, by ion-exchange of the chloro- phosphonate compound with an aqueous solution containing an inorganic, preferably an alkali metal, iodide or bromide salt at a temperature of from 10 °C to 100 °C wherein the ion exchange reaction medium has an acid pH equal to 6 or smaller, preferably in the range of from 1 to 4.

The pH measurements in the manufacturing arrangements are determined in the reaction medium at the reaction temperature.

Recovery of the reaction products is preferably carried out in a manner known per se to those skilled in the art. For example, the free phosphonic acids can be precipitated, e.g. by acidification of the reaction mixture, e.g. with concentrated hydrochloric acid, or by addition of a suitable solvent, e. g. ethanol, filtered of, washed and dried. Further purification can, e. g., be effected by recrystallisation or chromatographic methods.

The phosphonates of the invention are preferably used as reactive intermediates in the chemical and pharmaceutical industry, the textile industry, the oil industry, paper industry, sugar industry, beer industry, the agrochemical industry and in agriculture.

Preferred uses are as intermediates for the production of dispersants, water treatment agents, scale inhibitors, pharmaceuticals, detergents, secondary oil recovery agents, fertilisers and micronutrients (for plants).

The inventive phosphonates are illustrated by means of individual sample preparations, Examples I-VI, recited hereinafter.

I:
7.32g (0.025 mole) of a 68.8% aqueous solution of 2-(2-imino bis[methylene phosphonic acid] ethoxy) ethanol are placed in a high pressure glass tube and mixed with 9.86g (0.1 mole) of 37% aqueous HCl. The tube is capped and the mixture heated under stirring between 120°C and 125 °C for 7 hours. $^{31}$P NMR analysis of the crude reaction product showed the presence of 69% of 2-(2-imino bis[methylene phosphonic acid] ethoxy) chloro ethane with the balance being in majority the starting hydroxy product.

II:

7.32g (0.025 mole) of a 68.8% aqueous solution of 2-(2-imino bis[methylene phosphonic acid] ethoxy) ethanol are placed in a high pressure glass tube and mixed with 17.21g (0.1 mole) of 47% aqueous HBr. The tube is capped and the mixture heated under stirring between 120°C and 125 °C for 7 hours. $^{31}$P NMR analysis of the crude reaction product showed the presence of 68% of 2-(2-imino bis[methylene phosphonic acid] ethoxy) bromo ethane with the balance being in majority the starting hydroxy product.

The reactivity of hydroiodic acid in relation to ether or thioether bonds is documented in the art; it routinely follows that the preparation of the iodo species, corresponding to the chloro/bromo species of Examples I-II, requires the use of a halogen exchange of the reaction product with an inorganic iodide.

The testing data illustrate and clarify significant aspects of the claimed technology. I: and II: pertain to the formation of chloro or bromo derivatives starting from the corresponding hydroxyl alkyl ether amine. The products were formed in yields of 68 % to 69 % whereby the unreacted starting material constitutes the majority of the by-products.

**Claims**

1. A reactive phosphonate compound having the formula:

   Y-X-N(W) (ZPO$_3$M$_2$)

   wherein Y is a substituent the conjugated acid of which has a pKa equal to or smaller than 4.0 selected from the group of Cl, I, Br, HSO$_4$, NO$_3$, CH$_3$SO$_3$ and p-toluene sulfonate and mixtures thereof;
   X is [A-O]$_x$-A wherein A is a C$_2$-C$_9$ linear or branched hydrocarbon chain, C$_3$-C$_{10}$-cycloalkane-diyl or C$_6$-C$_{12}$-arene-diyl, and x is an integer from 1 to 200;
   provided that when X is substituted by OH such moiety can be attached to any carbon atom other than the second carbon atom starting from Y;
   Z is a C$_1$-C$_6$ alkylene chain;
   M is selected from H and C$_1$-C$_{20}$ linear or branched hydrocarbon chains, a cyclohexane or a phenyl moiety;
   W is selected from H, ZPO$_3$M$_2$ and [V-N(K)]$_n$K, wherein V is selected from: a C$_2$-C$_{50}$ linear or branched hydrocarbon chain, C$_3$-C$_{10}$-cycloalkane-diyl or C$_6$-C$_{12}$-arene-diyl, optionally substituted by C$_1$-C$_{12}$ linear, branched, cyclic or aromatic groups, (which chains and/or groups are) optionally substituted by OH, COOH, F, OR' or SR' moieties wherein R' is a C$_1$-C$_{12}$ linear or branched hydrocarbon chain, a cyclohexane or a phenyl moiety; and from [A-O]$_x$-A wherein A is a C$_2$-C$_9$ linear or branched hydrocarbon chain, C$_3$-C$_{10}$-cycloalkane-diyl or C$_6$-C$_{12}$-arene-diyl, and x is an integer from 1 to 200; and
   K is ZPO$_3$M$_2$ or H and n is an integer from 0 to 200.

2. The phosphonate compound in accordance with Claim 1 wherein
   M is selected from H and C$_1$-C$_{20}$ linear or branched hydrocarbon chains; and
   R' is a C$_1$-C$_{12}$ linear or branched hydrocarbon chain.

3. The phosphonate compound in accordance with Claim 1 or 2
   wherein
   A is a C$_2$-C$_9$ linear or branched hydrocarbon chain;
   M is selected from H and C$_1$-C$_{20}$ linear or branched hydrocarbon chains; and
   V is selected from: a C$_2$-C$_{50}$ linear or branched hydrocarbon chain, optionally substituted by C$_1$-C$_{12}$ linear, branched, cyclic or aromatic groups, (which chains and/or groups are) optionally substituted by OH, COOH, F, OR' or SR' moieties wherein R' is a C$_1$-C$_{12}$ linear or branched hydrocarbon chain.

4. The phosphonate compound in accordance with any one of Claims 1 to 3 wherein the pKa is equal to or smaller than 1.0;

5. The phosphonate compound in accordance with any one of Claims 1 to 4 wherein the individual moieties are selected as follows: X is [A-O]$_x$-A; V is C$_2$-C$_{30}$ or [A-O]$_x$-A, wherein for both, X and V independently, A is C$_2$-C$_6$ and x is 1-100; Z is C$_1$-C$_3$; M is H or C$_1$-C$_6$; and n is 1-100.

6. The phosphonate compound in accordance with any one of Claims 1 to 5 wherein X is [A-O]$_x$-A and (W) is ZPO$_3$M$_2$.

7. The phosphonate compound in accordance with any one of Claims 1 to 6 wherein the individual moieties are selected as follows: X is [A-O]$_x$-A; V is C$_2$-C$_{12}$ or [A-O]$_x$-A, wherein for both, X and V independently, A is C$_2$-C$_4$ and x is 1-100; Z is C$_1$; M is H, C$_1$-C$_4$ and n is 1-25.

8. The phosphonate compound in accordance with any one of Claims 1 to 7 wherein the optional OH substituent is attached, in the event Y stands for halogen, to any carbon atoms, other than the second, third or fourth, starting from Y, carbon atoms of the group X.

9. A process for the manufacture of the phosphonate compound of any one of Claims 1 to 8 by reacting an amine of the formula halogen-X-NH$_2$, wherein halogen stands for Cl, Br or I and X has the meaning as defined in claims 1 to 8, in aqueous medium having a pH equal to or smaller than 6 with phosphorous acid and formaldehyde at a temperature in the range of from 50 °C to 140 °C.

10. A process for the manufacture of the phosphonate compound in accordance with any one of Claims 1 to 8 by reacting a compound of the formula HO-X-N(ZPO$_3$M$_2$)$_2$, wherein X, Z and M have the meaning as defined in Claims 1 to 8, in aqueous medium having an acid pH equal to or smaller than 6, with a hydrohalogenic acid selected from hydrochloric acid, hydrobromic acid and hydroiodic acid with the proviso that hydroiodic acid is not used in the event X contains ether or thio-ether bonds.

11. The process for the manufacture of the phosphonate compound in accordance with Claim 10, wherein Y is iodide or bromide, by ion-exchange of the chloro compound with an aqueous solution containing an inorganic iodide or bromide salt at a temperature of from 10 °C to 100 °C wherein the ion-exchange medium has a pH of 6 or smaller.

12. The use of phosphonate compounds in accordance with any one of Claims 1 to 8 as intermediates for the production of dispersants, water treatment agents, scale inhibitors, pharmaceuticals, detergents, secondary oil recovery agents, fertilisers and micronutrients.

**Patentansprüche**

1. Reaktive Phosphonatverbindung der Formel

Y-X-N (W) (ZPO$_3$M$_2$)

wobei Y ein Substituent ist, dessen konjugierte Säure einen pKa gleich oder kleiner 4,0 hat, gewählt aus der Gruppe Cl, I, Br, HSO$_4$, NO$_3$, CH$_3$SO$_3$ und p-Toluolsulfonat und Mischungen davon;
X ist [A-O]$_x$-A, wobei A eine lineare oder verzweigte C$_2$-C$_9$-Kohlenwasserstoffkette, C$_3$-C$_{10}$-Cycloalkandiyl oder C$_6$-C$_2$-Arendiyl ist und x eine ganze Zahl von 1 bis 200 ist;
mit der Maßgabe, dass wenn X mit OH substituiert ist, ein solcher Rest mit einem anderen Kohlenstoffatom als mit dem zweiten Kohlenstoffatom ausgehend von Y verbunden ist;
Z ist eine C$_1$-C$_6$-Alkylenkette;
M ist gewählt aus H und linearen oder verzweigten C$_1$-C$_{20}$-Kohlenwasserstoffketten, einem Cyclohexan- oder einem Phenylrest;
W ist gewählt aus H, ZPO$_3$M$_2$ und [V-N(K)]$_n$K, wobei V gewählt ist aus: einer linearen oder verzweigten C$_2$-C$_{50}$-Kohlenwasserstoffkette, C$_3$-C$_{10}$-Cycloalkandiyl oder C$_6$-C$_{12}$-Arendiyl, gegebenenfalls substituiert mit linearen, verzweigten, cyclischen oder aromatischen C$_1$-C$_{12}$-Gruppen, (wobei die Ketten und/oder Gruppen) gegebenenfalls substituiert (sind) mit OH-, COOH-, F-, OR'- oder SR'-Resten, wobei R' eine lineare oder verzweigte C$_1$-C$_2$-Kohlenwasserstoffkette, ein Cyclohexan- oder ein Phenylrest ist; und aus [A-O]$_x$-A, wobei A eine lineare oder verzweigte C$_2$-C$_9$-Kohlenwasserstoffkette, C$_3$-C$_{10}$-Cycloalkandiyl oder C$_6$-C$_2$-Arendiyl ist, und x eine ganze Zahl von 1 bis 200 ist; und
K ist ZPO$_3$M$_2$ oder H und n ist eine ganze Zahl von 0 bis 200.

2. Phosphonatverbindung gemäß Anspruch 1, wobei M gewählt ist aus H und linearen oder verzweigten C$_1$-C$_{20}$-Kohlenwasserstoffketten; und
R' eine lineare oder verzweigte C$_1$-C$_{12}$-Kohlenwasserstoffkette ist.

3. Phosphonatverbindung gemäß Anspruch 1 oder 2, wobei
A eine lineare oder verzweigte C$_2$-C$_9$-Kohlenwasserstoffkette ist;
M gewählt ist aus H und linearen oder verzweigten C$_1$-C$_{20}$-Kohlenwasserstoffketten; und

V gewählt ist aus: einer linearen oder verzweigten $C_2$-$C_{50}$-Kohlenwasserstoffkette, gegebenenfalls substituiert mit linearen, verzweigten, cyclischen oder aromatischen $C_1$-$C_{12}$-Gruppen, (wobei die Ketten und/oder Gruppen) gegebenenfalls substituiert (sind) mit OH-, COOH-, F-, OR'- oder SR'-Resten, wobei R' eine lineare oder verzweigte $C_1$-$C_{12}$-Kohlenwasserstoffkette ist.

4. Phosphonatverbindung gemäß einem der Ansprüche 1 bis 3, wobei der $pK_a$ gleich oder kleiner 1,0 ist.

5. Phosphonatverbindung gemäß einem der Ansprüche 1 bis 4, wobei die einzelnen Gruppen folgendermaßen gewählt sind: X ist $[A-O]_x$-A; V ist $C_2$-$C_{30}$ oder $[A-O]_x$-A, wobei in X und V unabhängig voneinander A $C_2$-$C_6$ ist und x 1-100 ist; Z $C_1$-$C_3$ ist; M H oder $C_1$-$C_6$ ist; und n 1-100 ist.

6. Phosphonatverbindung gemäß einem der Ansprüche 1 bis 5, wobei X $[A-O]_x$-A ist und (W) $ZPO_3M_2$ ist.

7. Phosphonatverbindung gemäß einem der Ansprüche 1 bis 6, wobei die einzelnen Gruppen folgendermaßen gewählt sind: X ist $[A-O]_x$-A; V ist $C_2$-$C_{12}$ oder $[A-O]_x$-A, wobei in X und Y unabhängig voneinander A $C_2$-$C_4$ ist und x 1-100 ist; Z $C_1$ ist; M H, $C_1$-$C_4$ ist und n 1-25 ist.

8. Phosphonatverbindung gemäß einem der Ansprüche 1 bis 7, wobei der optionale OH-Substituent für den Fall, dass Y für Halogen steht, verbunden ist mit einem beliebigen anderen Kunststoffatom als dem zweiten, dritten oder vierten Kohlenstoffatom der Gruppe X, ausgehend von Y.

9. Verfahren zur Herstellung der Phosphonatverbindung gemäß einem der Ansprüche 1 bis 8 durch Umsetzen eines Amins der Formel Halogen-X-NH$_2$, wobei Halogen für Cl, Br oder I steht und X wie in den Ansprüchen 1 bis 8 definiert ist, in wässrigem Medium mit einem pH gleich oder kleiner 6 mit Phosphorsäure und Formaldehyd bei einer Temperatur im Bereich von 50 °C bis 140 °C.

10. Verfahren zur Herstellung der Phosphonatverbindung gemäß einem der Ansprüche 1 bis 8 durch Umsetzen einer Verbindung der Formel HO-X-N ($ZPO_3M_2$)$_2$, wobei X, Z und M wie in den Ansprüchen 1 bis 8 definiert sind, in wässrigem Medium mit einem sauren pH gleich oder kleiner 6, mit einer Hydrohalogensäure gewählt aus Hydrochlorsäure, Hydrobromsäure und Hydroiodsäure mit der Maßgabe, dass Hydroiodsäure nicht verwendet wird, wenn X Ether- oder Thioetherbindungen enthält.

11. Verfahren zur Herstellung der Phosphonatverbindung gemäß Anspruch 10, wobei Y Iodid oder Bromid ist, durch Ionenaustausch der Chlorverbindung mit einer wässrigen Lösung, enthaltend ein anorganisches Iodid- oder Bromidsalz bei einer Temperatur von 10 °C bis 100 °C, wobei das Ionenaustauschmedium einen pH von 6 oder kleiner hat.

12. Verwendung der Phosphonatverbindung gemäß einem der Ansprüche 1 bis 8 als Intermediat für die Herstellung von Dispergiermitteln, Wasserbehandlungsmitteln, Ablagerungsinhibitoren, Arzneimitteln, Tensiden, Mitteln für die sekundäre Ölgewinnung, Düngemitteln und Mikronährstoffen.

**Revendications**

1. Composé de phosphonate réactif ayant la formule :

Y-X-N(W) ($ZPO_3M_2$)

dans laquelle Y est un substituant dont l'acide conjugué a un pKa égal à ou inférieur à 4,0 choisi dans le groupe de Cl, I, Br, HSO$_4$, NO$_3$, CH$_3$SO$_3$ et p-toluènesulfonate et des mélanges de ceux-ci ;
X est $[A-O]_x$-A où A est une chaîne hydrocarbonée linéaire ou ramifiée en $C_2$-$C_9$, un cycloalcanediyle en $C_3$-$C_{10}$ ou un arènediyle en $C_6$-$C_{12}$, et x est un entier de 1 à 200 ;
à condition que lorsque X est substitué par OH, un tel fragment peut être lié à un atome de carbone quelconque autre que le deuxième atome de carbone de Y ;
Z est une chaîne alkylène en $C_1$-$C_6$;
M est choisi parmi H et des chaînes hydrocarbonées linéaires ou ramifiées en $C_1$-$C_{20}$, un fragment cyclohexane ou phényle ;
W est choisi parmi H, $ZPO_3M_2$ et $[V-N(K)]_n$K, où V est choisi parmi : une chaîne hydrocarbonée linéaire ou ramifiée

en $C_2$-$C_{50}$, un cycloalcanediyle en $C_3$-$C_{10}$ ou un arènediyle en $C_6$-$C_{12}$, facultativement substitué par des groupes en $C_1$-$C_{12}$ linéaires, ramifiés, cycliques ou aromatiques, (lesdites chaînes et/ou lesdits groupes étant) facultativement substitués par des fragments OH, COOH, F, OR' ou SR' où R' est une chaîne hydrocarbonée linéaire ou ramifiée en $C_1$-$C_{12}$, un fragment cyclohexane ou phényle ; et parmi [A-O]$_x$-A où A est une chaîne hydrocarbonée linéaire ou ramifiée en $C_2$-$C_9$, un cycloalcanediyle en $C_3$-$C_{10}$ ou un arènediyle en $C_6$-$C_{12}$, et x est un entier de 1 à 200 ; et K est $ZPO_3M_2$ ou H et n est un entier de 0 à 200.

2. Composé de phosphonate selon la revendication 1 dans lequel M est choisi parmi H et des chaînes hydrocarbonées linéaires ou ramifiées en $C_1$-$C_{20}$ ; et
R' est une chaîne hydrocarbonée linéaire ou ramifiée en $C_1$-$C_{12}$.

3. Composé de phosphonate selon la revendication 1 ou 2 dans lequel
A est une chaîne hydrocarbonée linéaire ou ramifiée en $C_2$-$C_9$ ;
M est choisi parmi H et des chaînes hydrocarbonées linéaires ou ramifiées en $C_1$-$C_{20}$ ; et
V est choisi parmi : une chaîne hydrocarbonée linéaire ou ramifiée en $C_2$-$C_{50}$, facultativement substituée par des groupes en $C_1$-$C_{12}$ linéaires, ramifiés, cycliques ou aromatiques, (lesdites chaînes et/ou lesdits groupes étant) facultativement substitués par des fragments OH, COOH, F, OR' ou SR' où R' est une chaîne hydrocarbonée linéaire ou ramifiée en $C_1$-$C_{12}$.

4. Composé de phosphonate selon l'une quelconque des revendications 1 à 3, le pKa étant égal ou inférieur à 1,0.

5. Composé de phosphonate selon l'une quelconque des revendications 1 à 4 dans lequel les fragments individuels sont choisis comme suit : X est [A-O]$_x$-A ; V est $C_2$-$C_{30}$ ou [A-O]$_x$-A, où pour X et V indépendamment, A est $C_2$-$C_6$ et x est de 1 à 100 ; Z est $C_1$-$C_3$ ; M est H ou $C_1$-$C_6$ ; et n est de 1 à 100.

6. Composé de phosphonate selon l'une quelconque des revendications 1 à 5 dans lequel X est [A-O]$_x$-A et (W) est $ZPO_3M_2$.

7. Composé de phosphonate selon l'une quelconque des revendications 1 à 6 dans lequel les fragments individuels sont choisis comme suit : X est [A-O]$_x$-A ; V est $C_2$-$C_{12}$ ou [A-O]$_x$-A, où pour X et V indépendamment, A est $C_2$-$C_4$ et x est de 1 à 100 ; Z est $C_1$ ; M est H, $C_1$-$C_4$ et n est de 1 à 25.

8. Composé de phosphonate selon l'une quelconque des revendications 1 à 7 dans lequel le substituant OH facultatif est lié, dans le cas où Y représente un halogène, à un atome de carbone quelconque, autre que les deuxième, troisième ou quatrième, à partir de Y, atomes de carbone du groupe X.

9. Procédé pour la fabrication du composé de phosphonate de l'une quelconque des revendications 1 à 8 par réaction d'une amine de la formule halogène-X-$NH_2$, dans laquelle halogène représente Cl, Br ou I et X a la signification telle que définie dans les revendications 1 à 8, en milieu aqueux ayant un pH égal à ou inférieur à 6 avec de l'acide phosphoreux et du formaldéhyde à une température dans la plage de 50 °C à 140 °C.

10. Procédé pour la fabrication du composé de phosphonate selon l'une quelconque des revendications 1 à 8 par réaction d'un composé de formule HO-X-N($ZPO_3M_2$)$_2$, dans laquelle X, Z et M ont la signification telle que définie dans les revendications 1 à 8, dans un milieu aqueux ayant un pH acide égal à ou inférieur à 6, avec un acide halogénohydrique choisi parmi l'acide chlorhydrique, l'acide bromhydrique et l'acide iodhydrique à condition que l'acide iodhydrique ne soit pas utilisé dans le cas où X contient des liaisons éther ou thioéther.

11. Procédé pour la fabrication du composé de phosphonate selon la revendication 10, dans lequel Y est iodure ou bromure par échange d'ions du composé chloro avec une solution aqueuse contenant un sel d'iodure ou bromure inorganique à une température de 10 °C à 100 °C où le milieu d'échange d'ions a un pH de 6 ou moins.

12. Utilisation de composés de phosphonate selon l'une quelconque des revendications 1 à 8 en tant qu'intermédiaires pour la production de dispersants, agents de traitement des eaux, inhibiteurs de tartre, agents pharmaceutiques, détergents, agents de récupération de pétrole secondaire, engrais et micronutriments.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0401833 A
- US 5879445 A
- WO 9408913 A
- US 4330487 A
- US 4260738 A
- US 4297299 A
- US 4707306 A
- EP 0711733 A
- US 5945240 A

**Non-patent literature cited in the description**

- **ZAITSEV V.N. et al.** Russian Chemical Bulletin. 1999, vol. 48, 2315-2320